# EUROPEAN PATENT SPECIFICATION

(11) **EP 1 135 739 B1**
(45) Date of publication and mention of the grant of the patent: **14.05.2003**
(21) Application number: 99960022.4
(22) Date of filing: 03.12.1999
(51) Int. Cl.: G06F 17/60, G07F 7/10, H04M 15/00, H04L 12/14

(54) **A METHOD AND SYSTEM FOR GAINING ACCESS**
VERFAHREN UND SYSTEM ZUR ZUGANGSERTEILUNG
PROCEDE ET SYSTEME D'ACCES A UN SERVEUR

(30) Priority: 04.12.1998 NL 1010720; 04.12.1998 NL 1010721
(43) Date of publication of application: 26.09.2001
(73) Proprietor: Helco Authentication Services B.V., 3431 HB Nieuwegein (NL)
(72) Inventor: Jansen, Alexander Theodorus, 5431 WK Cuyk (NL)
(74) Representative: Prins, Adrianus Willem
(86) International application number: NL9900744
(87) International publication number: WO00034907

(56) References cited:
- EP-A- 0 765 068
- WO-A-97/01920
- WO-A-98/40809
- US-A- 5 794 221
- US-A- 5 802 156

## Description

### BACKGROUND OF THE INVENTION

The invention relates to a method and system for logging a user into a server of a network. Before access can be gained to a server - for instance an Internet server for a paid service - a user name and a password must be logged in. The user name and the password are then used as a means for reliable exploitation of services offered by a server.

Different logging-in procedures are known. In these procedures the user must usually state a number of personal data, such as name and address and, to effect payment, for instance a credit card number. Moreover, membership is often required to gain access to the server. These procedures have the drawback that sensitive private information is asked from the user, transported over the network and stored in the server. Especially the transfer of credit card information is not tamper-proof. Moreover, not every user possesses a credit card. This limits the group of users. Because of the relatively large number of data to be supplied, the user can get impatient and prematurely abandon the logging-in attempt, so that "impulse use" is inhibited.

From European patent application EP 0 765 068 a method and system for logging a user into a network server of a network is known, in which access to the network server is effected by a separate phone call placed by the user to a 900 telephone number for billing purposes.

### SUMMARY OF THE INVENTION

The invention has for its object to remove the above drawbacks. To this end, the invention provides a method for logging a user into a server connected to the network, which server asks the user for his telephone number and his postal code. The server then checks whether the stated subscriber telephone number corresponds to the stated postal code. Moreover, a dial-in server, via which the user reaches the network, checks whether the user actually uses the stated subscriber telephone number. Subsequently, if the above has been found in order, a password is sent to the user, so that - if required for a limited period of time - access can be gained to the server connected to the network. Billing information can be sent via the dial-in server to the billing system of the telephone operator, so that the bill for the use of the server is added to the telephone bill of the user.

The exchange of personal and credit card data is rendered superfluous in the manner proposed by the invention. Tamper-proofness of the payment transactions is greatly enhanced, because no credit card data can be transmitted. The privacy of the user also remains fully guaranteed. The access process can be rapidly completed, so that impulse purchases are not inhibited.

### EXEMPLARY EMBODIMENT

The invention will now be explained in more detail with reference to a figure, which represents an exemplary embodiment.

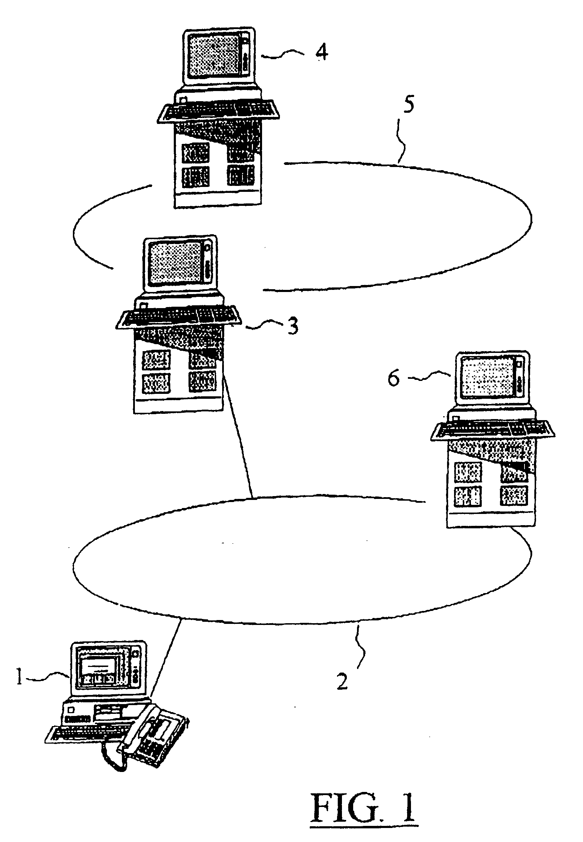

Fig. 1 is a diagram which schematically shows the method according to the invention. With a terminal 1 a user establishes a connection via a telephone network 2 with a dial-in server (ISP) 3 connected to the Internet 5. Via the dial-in server 3 the user establishes a connection with the network server 4 to be consulted. Contained in the network server 4 is commercial information, such as, for instance, product information, pictures, news reports, weather reports, games, business information. To consult or utilize the above, a financial compensation is asked. The network server 4 asks the user whether he wishes to gain access to the server by means of a password. The user is now asked to state the subscriber telephone number, by means of which he is connected with the dial-in server 3, and his postal code. The network server 4 asks the user for the desired period of validity. The network server 4 checks - by means of a telephone number/postal code database with a concordance system, incorporated into the server 4 - whether subscriber telephone number and postal code. correspond to each other. If this is the case, the network server 4 transmits the subscriber number stated by the user to the dial-in server 3. In the dial-in server 3 it is checked by means of a number identification service of the telephone network 4 whether the subscriber number stated by the user and the telephone number, by means of which the user maintains a dial-in connection with the network, correspond to each other. Then the dial-in server 3 transmits the result of the check to the network server 4. If the telephone number and the postal code correspond to each other and the user actually uses the stated telephone number, the network server 4 transmits a password to the user on terminal 1, who thus gains access to the network server 4. The billing information of the user can be stored in the dial-in server 3 or directly transmitted to a billing server 6 of the telephone network 2 where the telephone bills are made. The user thus pays via his telephone bill for the information, products or services asked from the network server 4.

## Claims

1. A method for logging a user, connected via a telephone network (2) and a dial-in server (3) to a network (5), into a network server (4) likewise connected to the network (5), **characterized in that**
- the network server (4) asks the user (1) for his subscriber telephone number and postal code;
- the network server (4) then checks whether the stated subscriber telephone number corresponds to the stated postal code and transmits the stated subscriber telephone number to the dial-in server (3);
- the dial-in server (3) then checks whether the user actually uses the stated subscriber telephone number for his actual telephone connection to the dial-in server (3) and transmits the result of the check to the network server (4);
- the network server then, if the telephone number and the postal code correspond to each other and the user actually uses the stated telephone number, transmits a password to the user, to be used for later gaining access to a service offered by the network server (4) connected to the network (5).

2. A method according to claim 1, **characterized in that** billing information for the service offered by the server (4), which the user has utilized, is sent via the dial-in server (3) to a billing system (6) of the telephone operator.

3. A method according to claim 1, **characterized in that** the validity of the password given by the server (4) has a limited duration.

4. A method according to claim 3, **characterized in that** the validity of the password has a maximum duration equal to the time during which the user is uninterruptedly connected via the telephone network (2) to the dial-in server.

## Patentansprüche

1. Verfahren zum Einloggen eines Benutzers, der über ein Telefonnetzwerk (2) und einen Einwählserver (3) mit einem Netzwerk (5) verbunden ist, in einen Netzwerkserver (4), der ebenfalls mit dem Netzwerk (5) verbunden ist, **dadurch gekennzeichnet, daß**
- der Netzwerkserver (4) den Benutzer (1) nach seinerTeilnehmertelefonnummer und der Postleitzahl fragt;
- der Netzwerkserver (4) sodann prüft, ob die genannte Teilnehmertelefonnummer der genannten Postleitzahl entspricht und die genannte Teilnehmertelefonnummer an den Einwählserver (3) übermittelt;
- der Einwählserver (3) anschließend prüft, ob der Benutzer tatsächlich die genannte Teilnehmertelefonnummer für seine gegenwärtige Telefonverbindung mit dem Einwählserver (3) verwendet und das Ergebnis der Prüfung an den Netzwerkserver (4) übermittelt;
- der Netzwerkserver sodann, wenn die Telefonnummer und die Postleitzahl einander entsprechen und der Benutzer tatsächlich die genannte Telefonnummer verwendet, dem Benutzer ein Passwort übermittelt, das einem späteren Zugriff auf einen von dem mit dem Netzwerk (5) verbundenen Netzwerkserver (4) bereitgestellten Service dient.

2. Verfahren nach Anspruch 1, **dadurch gekennzeichnet, daß** Rechnungsinformationen bezüglich des vom Benutzer genutzten und vom Server (4) bereitgestellten Service über den Einwählserver (3) an ein Rechnungsstellungssystem (6) des Telefonbetreibers übertragen werden.

3. Verfahren nach Anspruch 1, **dadurch gekennzeichnet, daß** die Gültigkeit des vom Server (4) vergebenen Passworts eine begrenzte Dauer hat.

4. Verfahren nach Anspruch 3, **dadurch gekennzeichnet, daß** die Gültigkeit des Passworts eine maximale Dauer hat, die gleich der Zeit ist, während der der Benutzer ununterbrochen über das Telefonnetzwerk (2) mit dem Einwählserver verbunden ist.

## Revendications

1. Procédé permettant d'enregistrer un utilisateur, connecté à un réseau (5) par l'intermédiaire d'un réseau téléphonique (2) et d'un serveur (3) à accès commuté, dans un serveur de réseau (4) connecté de la même façon au réseau (5), **caractérisé en ce que** :
- le serveur de réseau (7) demande à l'utilisateur (1) son numéro de téléphone d'abonné et son code postal ;
- le serveur de réseau (4) vérifier alors si le numéro de téléphone d'abonné déclaré correspond au code postal déclaré et transmet le numéro de téléphone d'abonné déclaré au serveur à accès commuté (3) ;
- le serveur à accès commuté (3) vérifie alors si l'utilisateur utilise réellement le numéro de téléphone d'abonné déclaré pour sa connexion téléphonique actuelle avec le serveur à accès commuté (3) et transmet le résultat du contrôle au serveur de réseau (4) ;
- alors, le serveur de réseau, si le numéro de téléphone et le code postal correspondent l'un à l'autre et si l'utilisateur utilise présentement le numéro de téléphone déclaré, transmet un mot de passe à l'utilisateur, afin que celui-ci soit utilisé pour donner ultérieurement accès à un service offert par le serveur de réseau (4) connecté au réseau (5).

2. Procédé selon la revendication 1, **caractérisé en ce que** des informations de facturation relatives au service offert par le serveur (4), que l'utilisateur a utilisé, sont envoyées à un système de facturation (6) de l'opérateur téléphonique via le serveur à accès commuté (3).

3. Procédé selon la revendication 1, **caractérisé en ce que** la validité du mot de passe donné par le serveur (2) a une durée limitée.

4. Procédé selon la revendication 3, **caractérisé en ce que** la validité du mot de passe possède une durée maximale qui est égale à la durée pendant laquelle l'utilisateur est connecté sans interruption au serveur à accès commuté par l'intermédiaire du réseau téléphonique (2).
